Europäisches Patentamt

European Patent Office

Office européen des brevets

(19)

(11) Publication number: **0 331 916 B1**

(12)

# EUROPEAN PATENT SPECIFICATION

(45) Date of publication of patent specification: **02.12.92**   (51) Int. Cl.5: **F16F 13/00**, F16L 5/00

(21) Application number: **89102129.7**

(22) Date of filing: **08.02.89**

(54) **Elastic bushing.**

(30) Priority: **08.03.88 IT 1968488**

(43) Date of publication of application:
**13.09.89 Bulletin 89/37**

(45) Publication of the grant of the patent:
**02.12.92 Bulletin 92/49**

(84) Designated Contracting States:
**DE ES FR**

(56) References cited:
**GB-A- 2 192 968**
**US-A- 4 728 086**

**PATENT ABSTRACTS OF JAPAN**

**PATENT ABSTRACTS OF JAPAN**

**PATENT ABSTRACTS OF JAPAN**

(73) Proprietor: **PIRELLI SISTEMI ANTIVIBRANTI S.P.A.**
**Piazzale Cadorna, 5**
**I-20123 Milan(IT)**

(72) Inventor: **Seghi, Paolo**
**Via Freikofel, 19/2**
**I-20138 Milan(IT)**
Inventor: **Vanessi, Giovanni**
**Via Alfieri, 60**
**I-20099 Sesto S. Giovanni (Milan)(IT)**

(74) Representative: **Giannesi, Pier Giovanni et al**
**Pirelli S.p.A. Direzione Brevetti Piazzale Cadorna, 5**
**I-20123 Milano(IT)**

EP 0 331 916 B1

# Description

The present invention concerns an elastic bushing and more particularly it refers to an elastic bushing intended to dampen hydraulically the vibrations of low frequency and great amplitude acting onto it.

As known, a bushing substantially comprises two concentric cylindrical elements connected together by means of an elastomeric body. The first cylindrical element is usually fastened with a shaft passing through it, whilst the second element is secured to a permanent structure. For instance, the first element might be secured to a connecting rod and the second to the body of a vehicle.

Owing to the deformability of the elastomeric body situated in the space inside the two cylindrical elements, the shaft - when it is in loaded condition - has a certain degree of freedom with respect to the fixed structure to which the outermost element of the bushing is associated.

However, bushings of the above described type are unable to dampen the vibrations, due to oscillating loads, of great amplitude and small frequency, to which they are subjected.

To eliminate this disadvantage, bushings are known which comprise two cylindrical elements, an elastomeric body situated between said elements, and two chambers separated from each other by the elastomeric material and filled with a fluid; the two chambers are connected together by an appropriate duct.

In this arrangement, the two chambers are situated in opposite position with respect to the axial plane so that, in the presence of a load variation acting on the shaft, one of the chambers is subjected to compression and the fluid therein contained is compelled to pass, through the duct, into the second chamber which is in turn compelled to expand. In particular, in the event of low frequency and great amplitude vibrations, the fluid is caused to flow slowly through the duct between the two chambers, with a consequent dissipation of energy, to which corresponds a dampening of the vibrations imparted to the system.

Unfortunately, this solution gives rise to a stiffening of the system in the presence of high frequency and small amplitude vibrations.

In fact, owing to the oscillation speed, the fluid - in general a low viscosity liquid - is unable to pass through the duct which places the two chambers into communication, so that any pressure variation in the liquid cannot be absorbed by the system and is transmitted, in the form of inadmissible vibrations, to the permanent structure associated to the bushing.

In order to eliminate this drawback, bushings have been carried out having also two air cavities arranged opposite to each other. The cavities are defined by said second elements and by flexible diaphragms which separate the air cavities from the fluid chambers.

These kind of bushings are disclosed in documents GB-A-2192968, JP-A-60 184740, JP-A-62118133 and US-A-4728086.

Due to the above described structure, however, the vibrations are not completely absorbed.

The present invention aims to provide an elastic bushing of the hydraulic damping type, which is able to overcome the above indicated drawbacks and in particular is able to dampen vibrations of low frequency and great amplitude and to maintain low stiffening values when operating with high frequency oscillations of small amplitude, for instance of the order of tenths of millimeter.

More specifically, the present invention has the aim to provide a system which is able to prevent immediately any transmission of high frequency and small amplitude oscillations towards the permanent structure associated to the bushing.

A further aim of the invention is to obtain good results in the elimination of transmissions of high frequency vibrations towards the permanent structure without the risk of impairing the performance and the function of the supporting elements forming the bushing and in particular without compromising in any way the effect of hydraulic damping of low frequency and great amplitude oscillations.

Accordingly, the object of the present invention is an elastic bushing as described in Claim 1.

The present invention will be better understood from the following detailed description made with reference to the figures of the attached sheets of drawings, in which :

FIGURE 1 - represents a longitudinal section of the bushing according to the invention,

FIGURE 2 - represents a section of the bushing taken at 90° with respect to the section of FIG. 1,

FIGURE 3 - shows in its top portion a cross section of the bushing taken along line III-III of FIG. 1 and its bottom portion a top view of the bushing of FIG. 1,

FIGURE 4 - shows in section the cylindrical central element of the bushing,

FIGURE 5 - is a cross section of the central part of the bushing of FIG.1 , devoid of the radially innermost cylindrical portion, before being inserted in the outermost cylindrical element,

FIGURE 6 - is a section of FIG.5 taken along line VI-VI,

FIGURES 7 - shows in longitudinal section the cylindrical sleeve into which is forced the central part of the bushing of FIG.6, and

FIGURE 8 - shows in longitudinal section a tubular portion into which is inserted the cylindrical sleeve of FIG.7.

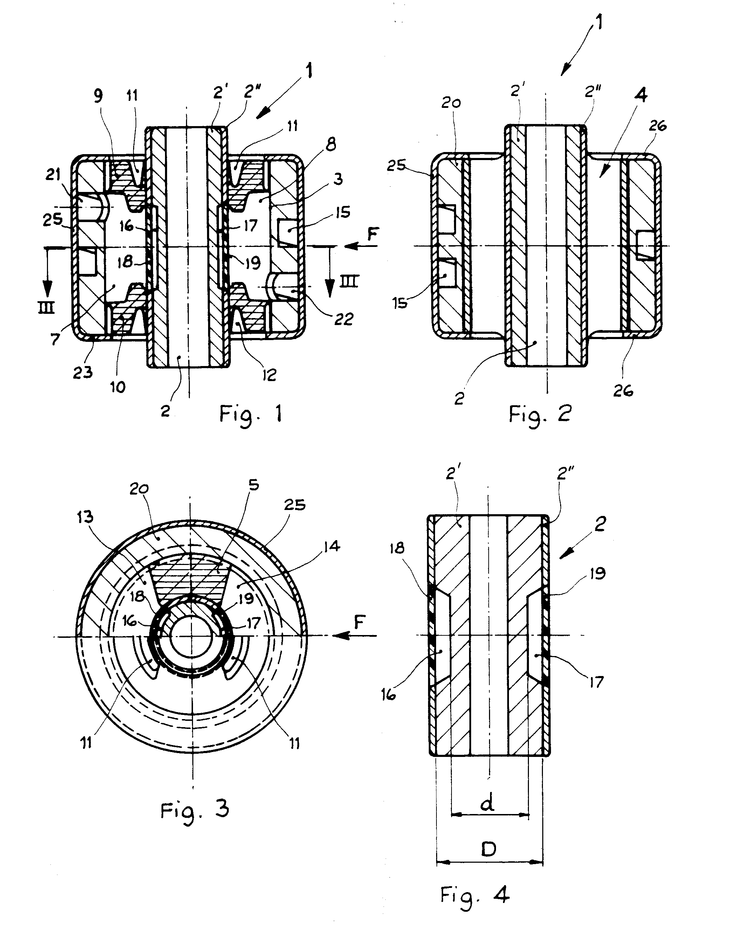

FIGURES 1 to 3 illustrate an elastic bushing (1) which comprises two substantially concentric cylindrical elements (2),(3), the innermost of which is fastened with a shaft or a similar element passing into it, whilst the outermost is associated to a structure which thereby becomes connected to the shaft.

On its turn, the cylindrical element (2) comprises a portion (2') of big thickness and a covering metal portion (2") of smaller thickness.

In a preferred embodiment, the invention may refer to a system comprising two equal bushings, in the first of which the first element is connected to a shaft associated with the motor of a vehicle and the second element is secured to a connecting rod, whilst in the second bushing the first element is connected to the body shell and the second element is fastened with the connecting rod.

An elastomeric body (4) is interposed between the two cylindrical elements (2) and (3) to connect them to each other; said body is formed by two solid portions (5),(6) which are in opposite position with respect to an axial plane and are alternated to hollow spaces (7),(8) closed at the two ends of the bushing by two faces (9),(10) of the elastomeric body.

Faces (9) and (10) are provided on their outer surface with circular recesses (11) and (12) to impart to the elastomeric body a high elastic deformability in the presence of loads directed as indicated by arrow F in FIGURES 1 and 3.

Spaces (7),(8) limited by faces (9),(10), in combination with the two cylindrical elements of the bushing, form two chambers (13),(14) filled with a fluid, preferably a liquid of low viscosity, from $1.5 \times 10^{-4}$ to $2.5 \times 10^{-4}$ m$^2$s$^{-1}$ (150 to 250 centistokes), as for instance a water-glycol solution in equal percentage.

Chambers (13),(14) are placed into hydraulic communication by a duct able to dampen the great amplitude and low frequency oscillations which are directed as arrow F or in opposite sense.

In the most general solution, bushing (1) is characterized in that it comprises means for absorbing the high frequency and small amplitude oscillations, which are substantially formed by two variable volume cavities, hermetically scaled to contain a compressible fluid, as for example air.

The two cavities are situated in chambers (13) and (14) and each of them is delimited between a rigid surface of the bushing and a flexible diaphragm arranged perpendicularly to the direction of the load to be absorbed.

In a preferred solution, bushing (1) is characterized in that it comprises two cavities (16),(17) (FIGS.1,3,4), obtained by reducing the transversal dimensions of the thick portion (2') of the first element (2) from a diameter D to a diameter d; the space originated by said reduction is tightly sealed by flexible diaphragms (18),(19) of elastomeric material, having a thickness ranging between 0.5 and 2 mm and in particular a thickness less than 1 mm.

The ends of diaphragms (18) and (19) are associated to the covering metallic cylindrical portion (2") of the first element (2) by means of a rubber/metal bonding.

To this purpose the cylindrical portion is provided with appropriate openings, corresponding to the cavities of portion (2') and tightly closed by the diaphragms.

In an embodiment, the two cavities (16),(17) are defined in an axial plane by a rectangular section whose longer side extends longitudinally of the bushing, at values preferably ranging between 8 mm and 25 mm. Further, each cavity (16),(17) may have a depth, measured in a radial plane, ranging between 0.5 and 3 mm.

The width of each cavity may correspond to that represented by an arc on the first element (2), whose angle varies from 90° to 150°. In particular, the bushing is characterized in that the diaphragms (18),(19) and the elastomeric body (4) build up a monolithic piece of elastomeric material.

The outermost cylindrical element (3) is substantially formed by a rigid sleeve (FIGS. 1,2,7) made for example of plastic material, containing in its inside a duct (15) to place the two chambers (13),(14) into communication.

Preferably, said damping duct (15) is formed by several coils arranged inside the wall of sleeve (20) in such a way that the input end (21) and the output end (22) are at the maximum possible distance in the direction of the bushing axial length. In particular, duct (15) may develop along one coil and a half, corresponding to a total angle of 540°.

In a preferred embodiment, concerning a duct having a square or circular cross section, the ratio between the maximum transversal dimension and the length of the duct is preferably ranging between 0.02 and 0.06.

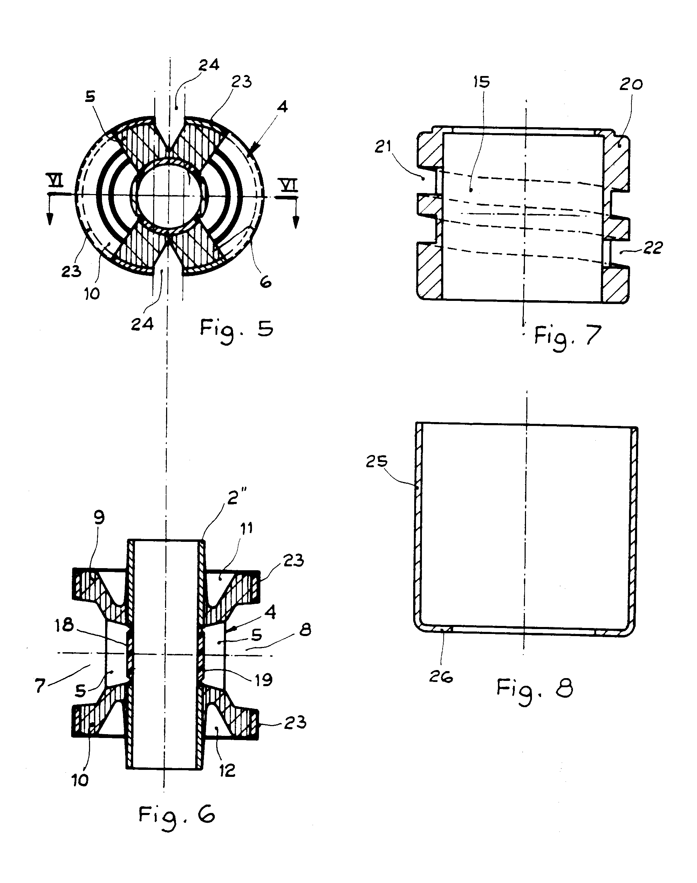

The ridge sleeve (20) contains, forced in its interior, the central part of the bushing, constituted by the covering portion (2") of element (2) with diaphragms (18),(19), by the elastomeric body (4), by a rigid jacket (23) associated to body (4) by rubber/metal bonding, and at last by the cylindrical portion (2'), radially innermost to element (2), already provided with cavities (16),(17) and then inserted into the covering portion (2") illustrated in FIGS.5 and 6.

The rigid jacket (23) surrounds completely both the opposite lateral faces (9),(10) and the solid portions (5),(6) of the elastomeric body and is provided with large windows along spaces (7),(8) to allow the free flow of the damping liquid between the chambers and duct (15).

Moreover, as clearly represented in FIG.5, each solid portion (5),(6) of the elastomeric body (4) comprises an opening (24) of substantially triangular shape, extending for the whole length of the bushing.

The central portion of the bushing comprising opening (24) is forced inside the cylindrical sleeve (20), precompressing the elastomeric body (4) so as to close openings (24). The precompression of rubber, in the elastomeric body (4), cooperates in increasing the life of the elastomeric material forming the bushing, subjected to cyclic stresses.

The sleeve comprising the central portion of the bushing is then inserted in the tubular portion (25) shown in FIG.7 and the whole is blocked by turning the end walls 26 of the tubular portions on the terminal front surfaces of the sleeve and on the front walls of jacket (23).

The operation of the bushing is the following :

- In the presence of oscillations in the direction of arrow F of FIGS.1 and 3, with low frequency values, ranging between 3 and 25 Hertz, and great amplitude values, ranging between 1 mm and 4 mm, one of chambers (13),(14) is subjected to compression and the other to expansion, with a consequent passage of liquid from one chamber to the other through duct (15). The liquid, passing in duct (15) whose cross section and length are appropriately selected, is subjected to a restraining action, with a consequent dissipation of energy and damping of the oscillation imparted to the system.

- In the presence of oscillations in the direction of arrow F of FIGS.1 and 3, with high frequency values, ranging between 25 and 250 Hertz, and small amplitude values, ranging between 0.05 mm and 0.2 mm, the speed of oscillation is such as to prevent passage of liquid through the reduced space of the damping duct (15) and the variations in the pressure of the liquid are absorbed by the deformation of one of the two diaphragms (18),(19) and by the corresponding compression of air inside the recess closed by said diaphragms.

The invention is able to achieve all of the intended purposes.

In fact, as it is clearly visible from the figures, the oscillations of high frequency and small amplitude are applied perpendicularly to the surfaces of diaphragms (18),(19), which are immediately subjected, by a direct action, to a deformation by flexion, compressing therefore the fluid contained in each cavity (16),(17). Consequently the system can absorb promptly and correctly high frequency and small amplitude vibrations, avoiding the transmission of reaction forces towards the permanent structure associated to the bushing.

Further, the absorption means are substantially based on the use of a flexible diaphragm constituting a separate part with respect to the two lateral faces (9),(10) of the bushing. Therefore, the two faces of the elastomeric body may be given the most appropriate thickness values to bear without inconveniences the static load acting on the bushing, whilst the thickness of the diaphragm may have much smaller values, generally less than 1 mm. to assure, by a high flexibility, the absence of any stiffening of the high frequency system.

Moreover, all the further purposes, achieved by the preferred embodiments of the invention, are clearly evident from the foregoing description. In fact, the feature of using the diaphragm as a lid to cover a cavity obtained by reducing the cross thickness of the innermost cylindrical element (2), permits to keep said diaphragm far from the input end (21) and the output end (22) of the damping duct (15).

By this solution, diaphragms (18),(19) are protected against the mechanical thrust action of the liquid passing through the damping duct (15). In this way the diaphragm, not subjected to strong thrusts, remains unaffected in its lasting and cooperates in imparting a long life to the means absorbing the high frequency oscillations of the bushing.

In addition, in the arrangement comprising a damping duct obtained in a rigid sleeve, owing to the feature of having invariable dimensions, the damping effect takes place in respect of the oscillations having pre-established frequency values.

In particular, a duct obtained in the wall of sleeve (20) can be extended to take a substantially helical shape characterized by more than one coil, so as to create a ratio between its diameter and its length which assures the best results as regards damping. Further, the damping duct is conveniently characterized by the fact that the treated liquid outflows and is conveyed towards chamber (13) or (14) in a direction tangential to the bushing.

Therefore, reactions in the same direction of the oscillating load are excluded. In the practice, the system is able to dissipate energy by a tangential circulation of liquid and therefore it cannot transmit vibrations, in the direction of the load applied, towards the structure.

**Claims**

1. An elastic bushing (1) subjected to oscillating load comprising:
   - an innermost hollow substantially cylindrical element (2), said element (2) being fastened to a shaft or a similar member contained in its inside,
   - an outermost hollow substantially cylindrical element (3) concentric to the innermost element (2), said outermost element (3) being associated to a structure which thereby becomes connected to the shaft,
   - an elastomeric body (4) interposed between said elements (2, 3) for their mutual connection, said body (4) being formed by two solid portions (5, 6), opposite to each other with respect to an axial plane, said solid portions being alternated to hollow spaces (7, 8), closed at the two bushing ends by two faces (9, 10) of the elastomeric body, said spaces limited by said faces forming two chambers (13, 14) filled with a fluid,
   - a duct (15) contained in said outermost element (3), said duct placing in mutually communication the two chambers (13, 14) and being able to dampen great amplitude and low frequency oscillations between said shaft and said fixed structure,
   - two variable volume hermetically sealed cavities (16, 17) for absorbing high frequency and small amplitude oscillations, each cavity (16, 17) being separated from the corresponding chamber (13, 14) by a flexible diaphragm (18, 19), the interior of the cavities being filled by a compressible fluid and the diaphragm of each cavity being oriented perpendicularly to the direction of the oscillating load to be absorbed, characterized in that each cavity (16, 17) is defined by the outer cylindrical surface of the innermost element (2) and the corresponding flexible diaphragm (18, 19).

2. An elastic bushing as in claim 1, characterized in that each cavity (16, 17) is formed by reducing the transversal dimensions of the first element (2) at least in the portion relative to each chamber (13, 14), the space originated by said reduction being tightly sealed by the flexible diaphragm (18, 19).

3. An elastic bushing as in claim 1 or 2, characterized in that the cavity (16, 17) is defined in an axial plane by a rectangular section whose larger side, in the direction of the bushing, ranges between 8 and 25 mm.

4. An elastic bushing as in any of the preceding claims, characterized in that the depth of each cavity, measured in a radial plane, ranges between 0,5 and 3 mm.

5. An elastic bushing as in any of the preceding claims, characterized in that the diaphragm (18, 19) and the elastomeric body form a monolithic piece of elastomeric material associated between said first element and a jacket external to the elastomeric body.

6. An elastic bushing as in claim 1, characterized in that said elastomeric body (4) is assembled by forcement between the two cylindrical elements (2, 3).

7. An elastic bushing as in claim 1, characterized in that the outermost cylindrical element (3) is formed by a rigid sleeve (20) containing in its inside the duct (15) which places the two chambers (13, 14) into commication.

8. An elastic bushing as in claim 7, characterized in that the sleeve (20) is inserted in a tubular portion (25) whose ends (26) are folded on the front surfaces of the sleeve and block the faces of the elastomeric body (4) situated between the first and the second element (2, 3) of the bushing.

9. An elastic bushing as in claim 1, characterized in that it comprises a rigid sleeve (20) associated to the outermost cylindrical element (3) and a rigid jacket (23) around the elastomeric body (4), the sleeve containing in its inside the communication duct (15), said duct being shaped as at least one coil with inlet and outlet ends (21, 22), facing the two chambers (13, 14), the jacket comprising windows at at least said ends of the duct.

10. An elastic bushing as in claim 1, characterized in that said duct (15) has a spiral-shaped path extending through an angle of 540° and the inlet and outlet ends (21, 22) are situated at the maximum mutual distance measured in the axial direction.

11. An elastic bushing as in claim 1, characterized in that the faces (9, 10) of the elastomeric body are provided on their outer surface with circular recesses (11, 12) to impart elastic deformability between the two cylindrical elements (23).

**12.** An elastic bushing as in claim 1, characterized in that the elastomeric body (4) is associated by metal/rubber bonding to the innermost element (2) and

comprises in each of the two solid portions (5, 6) an opening (24) of substantially triangular shape, which closes when the elastomeric body is inserted into the outermost cylindrical element (3).

**13.** An elastic bushing as in claim 1, characterized in that the innermost cylindrical element (2) comprises a cylindrical portion (2') of big thickness (D), containing, at opposite sides, the cavities (16, 17) obtained by a reduction of diameter (d), and an outermost cylindrical covering portion (2") of small thickness, comprising two openings opposite to each other and located in correspondence of the cavities, the openings being tightly closed by the elastomeric diaphragms (18, 19) associated by rubber/metal bonding to the covering portion (2").

**Patentansprüche**

**1.** Elastische Hülse (1), die einer oszillierenden Last unterworfen wird, umfassend:
- ein inneres hohles im wesentlichen zylindrisches Element (2), welches an einem Schaft oder einem ähnlichen Teil befestigt ist, der in seinem Inneren enthalten ist,
- ein äußeres hohles im wesentlichen zylindrisches Element (3), welches zu dem inneren Element (2) konzentrisch und einem Gebilde Zugeordnet ist, welches dadurch mit dem Schaft verbunden wird,
- einen elastomeren Körper (4), der zwischen den Elementen (2,3) für deren gegenseitige Verbindung angeordnet und durch zwei massive Teile (5,6) gebildet ist, die mit Bezug auf eine axiale Ebene einander gegenüberliegen und sich mit Hohlräumen (7,8) abwechseln, die an den beiden Hülsenenden durch zwei Flächen (9,10) des elastomeren Körpers geschlossen sind, wobei die genannten Räume durch die genannten Flächen begrenzt sind, welche zwei Kammern (13,14) bilden, die mit einem Fluid gefüllt sind,
- einen Kanal (15), der in dem äußeren Element (3) enthalten ist und die beiden Kammern (13,14) in gegenseitige Verbindung bringt sowie in der Lage ist, Schwingungen großer Amplitude und niedriger Frequenz zwischen dem Schaft und dem befestigten Gebilde zu dämpfen, und
- zwei hermetisch abgeschlossene Hohlräume (16,17) variablen Volumens zum Absorbieren von Schwingungen hoher Frequenz und kleiner Amplitude, wobei jeder Hohlraum (16,17) von der betreffenden Kammer (13,14) durch eine biegsame Membran (18,19) getrennt ist und das Innere der Hohlräume mit einem kompressiblen Fluid gefüllt und die Membran jedes Hohlraumes rechtwinkelig zu der Richtung der zu absorbierenden oszillierenden bzw. schwingenden Last orientiert ist, dadurch **gekennzeichnet,** daß jeder Hohlraum (16,17) durch die äußere zylindrische Fläche des inneren Elementes (2) und die entsprechende biegsame Membran (18,19) bestimmt ist.

**2.** Elastische Hülse nach Anspruch 1, dadurch gekennzeichnet, daß jeder Hohlraum (16,17) gebildet ist durch Verringern der Querabmessungen des ersten Elementes (2) wenigstens in dem Teil relativ zu jeder Kammer (13,14), wobei der durch die Verringerung hervorgerufene Raum durch die biegsame Membran (18,19) dicht abgeschlossen ist.

**3.** Elastische Hülse nach Anspruch 1 oder 2, dadurch gekennzeichnet, daß der Hohlraum (16,17) bestimmt ist in einer axialen Ebene durch einen rechtwinkeligen Abschnitt, dessen größere Seite in Richtung der Hülse im Bereich zwischen 8 mm und 25 mm liegt.

**4.** Elastische Hülse nach irgendeinem der vorhergehenden Ansprüche, dadurch gekennzeichnet, daß die Tiefe jedes Hohlraumes, gemessen in einer radialen Ebene, zwischen 0,5 mm und 3 mm liegt.

**5.** Elastische Hülse nach irgendeinem der vorhergehenden Ansprüche, dadurch gekennzeichnet, daß die Membran (18,19) und der elastomere Körper ein monolithisches Stück aus elastomerem Material bilden, welches zwischen dem ersten Element und einem Mantel außerhalb des elastomeren Körpers angeordnet ist.

**6.** Elastische Hülse nach Anspruch 1, dadurch gekennzeichnet, daß der elastomere Körper (4) angeordnet ist durch Einzwingen zwischen die beiden zylindrischen Elemente (2,3).

**7.** Elastische Hülse nach Anspruch 1,
dadurch gekennzeichnet, daß das äußere zylindrische Element (3) durch eine starre Hülse (20) gebildet ist, die in ihrer Innenseite den Kanal (15) enthält, der die beiden Kammern (13,14) in Verbindung miteinander bringt.

**8.** Elastische Hülse nach Anspruch 7,
dadurch gekennzeichnet, daß die Hülse (20) in einen rohrförmigen Teil (25) eingesetzt ist, dessen Enden (26) auf die Vorderflächen der Hülse umgelegt sind und die Flächen des elastomeren Körpers (4) festlegen, der zwischen dem ersten und dem zweiten Element (2,3) der elastischen Hülse liegt.

**9.** Elastische Hülse nach Anspruch 1,
dadurch gekennzeichnet, daß sie eine starre Hülse (20), die dem äußeren zylindrischen Element (3) zugeordnet ist und einen starren Mantel (23) rund um den elastomeren Körper (4) aufweist, die starre Hülse in ihrer Innenseite den Verbindungskanal (15) enthält, der als wenigstens eine Windung mit Einlaß und Auslaßenden (21,22) gestaltet ist, die den beiden Kammern (13,14) zugewandt sind, und der Mantel Fenster wenigstens an den Enden des Kanales hat.

**10.** Elastische Hülse nach Anspruch 1,
dadurch gekennzeichnet, daß der Kanal (15) einem schraubenlinienförmigen Weg folgt, der sich über einen Winkel von 540° erstreckt, und die Einlaß-und Auslaßenden (21,22) an dem maximalen gegenseitigen Abstand, gemessen in der axialen Richtung, angeordnet sind.

**11.** Elastische Hülse nach Anspruch 1,
dadurch gekennzeichnet, daß die Flächen (9,10) des elastomeren Körpers an ihrer Außenseite mit kreisförmigen Ausnehmungen (11,12) versehen sind, um zwischen den beiden zylindrischen Elementen (23) elastische Verformbarkeit zu erteilen.

**12.** Elastische Hülse nach Anspruch 1,
dadurch gekennzeichnet, daß der elastomere Körper (4) mittels einer Metall/Kautschuk-Bindung dem inneren Element (2) zugeordnet ist und in jedem der beiden massiven Teile (5,6) eine Öffnung (24) von im wesentlichen dreieckförmiger Gestalt aufweist, die sich schließt, wenn der elastomere Körper in das äußere zylindrische Element (3) eingesetzt wird.

**13.** Elastische Hülse nach Anspruch 1,
dadurch gekennzeichnet, daß das innere zylindrische Element (2) einen zylindrischen Teil (2') großer Dicke (D), der auf gegenüberliegenden Seiten die durch eine Verringerung des Durchmessers (d) erhaltenen Hohlräume (16,17) enthält, und einen äußeren zylindrischen Abdeckteil (2'') kleiner Dicke aufweist, der zwei Öffnungen aufweist, die einander gegenüberliegen und in Entsprechung zu den Hohlräumen angeordnet sowie durch die elastomeren Membranen (18,19) dicht verschlossen sind, welche mittels Kautschuk/Metall-Bindung dem Abdeckteil (2'') zugeordnet sind.

**Revendications**

**1.** Un tampon élastique soumis à une charge oscillante comprenant:
- un élément intérieur creux sensiblement cylindrique (2), ledit élément (2) étant fixé sur un arbre ou un organe semblable contenu à l'intérieur de celui-ci,
- un élément extérieur creux sensiblement cylindrique (3) concentrique à l'élément intérieur creux (2), ledit élément extérieur (3) étant associé à une structure qui devient ainsi reliée à l'arbre,
- un corps élastique (4) interposé entre lesdits éléments (2, 3) pour les relier entre eux, ledit corps (4) étant formé de deux parties massives (5, 6) opposées entre elles par rapport à leur plan axial, lesdites parties massives étant disposées en alternance avec des espaces creux (7, 8) fermés aux deux extrémités du tampon par deux faces (9, 10) du corps élastomère, lesdits espaces limités par les deux faces formant deux chambres (13, 14) remplies d'un fluide,
- un conduit (15) contenu dans ledit élément extérieur (3), ledit conduit mettant en communication entre elles les deux chambres (13, 14) et étant susceptible d'amortir des oscillations de grande amplitude et de basse fréquence entre ledit arbre et ladite structure fixe,
  deux cavités hermétiquement fermées (16, 17) à volume variable pour absorber des oscillations de haute fréquence et de faible amplitude, chaque cavité (16, 17) étant séparée de la chambre correspondante (13, 14) par un diaphragme flexible (18, 19), l'intérieur des cavités étant rempli d'un fluide compressible et le diaphragme de chaque cavité étant orienté perpendiculairement à la direction de la charge oscillante à absorber,
  caractérisé en ce que chaque cavité (16, 17) est définie par la surface cylindrique extérieure de l'élément intérieur (2) et par le diaphragme flexible correspondant (18, 19).

2. Un tampon élastique selon la revendication 1, caractérisé en ce que chaque cavité (16, 17) est formée en réduisant les dimensions transversales du premier élément (2) au moins dans la partie relative à chaque chambre (13, 14), l'espace engendré par ladite réduction étant hermétiquement fermé par le diaphragme flexible (18, 19).

3. Un tampon élastique selon la revendication 1 ou 2 , caractérisé en ce que la cavité (16, 17) est définie dans un plan axial par une section rectangulaire dont le plus grand côté, dans la direction du tampon, est compris entre 8 et 25 mm.

4. Un tampon élastique selon l'une quelconque des revendications précédentes, caractérisé en ce que la profondeur de chaque cavité, mesurée dans un plan radial, est comprise entre 0,5 et 3 mm.

5. Un tampon élastique selon l'une quelconque des revendications précédentes, caractérisé en ce que le diaphragme (18, 19) et le corps élastomère forment une pièce d'un seul tenant en matière élastomère associé entre ledit premier élément et une enveloppe extérieure au corps élastomère.

6. Un tampon élastique selon la revendication 1, caractérisé en ce que ledit corps élastomère (4) est assemblé à force entre les deux éléments cylindriques (2, 3).

7. Un tampon élastique selon la revendication 1, caractérisé en ce que l'élément cylindrique extérieur (3) consiste en un manchon rigide (20) à l'intérieur duquel est contenu le conduit (15) qui met en communication les deux chambres (13, 14).

8. Un tampon élastique selon la revendication 7, caractérisé en ce que le manchon (20) est inséré dans une partie tubulaire (25) dont les extrémités (26) sont pliées sur les surfaces avant du manchon et bloquent les faces du corps élastomère (4) situé entre le premier et le deuxième éléments (2, 3) du tampon.

9. Un tampon élastique selon la revendication 1, caractérisé en ce qu'il comprend un manchon rigide (20) associé à l'élément cylindrique extérieur (3) et une enveloppe rigide (23) autour du corps élastomère (4), le conduit de communication (15) étant contenu à l'intérieur du manchon, la forme dudit conduit étant au moins celle d'une spire dont les extrémités d'entrée et de sortie (21, 22) sont tournées vers les deux chambres (13, 14), l'enveloppe comportant des fenêtres au moins auxdites extrémités du conduit.

10. Un tampon élastique selon la revendication 1, caractérisé en ce que la forme du trajet dudit conduit (15) est une spirale s'étendant sur un angle de 540° et les extrémités d'entrée et de sortie (21, 22) sont situées à la distance mutuelle maximale mesurée selon la direction axiale.

11. Un tampon élastique selon la revendication 1, caractérisé en ce que des évidements circulaires (11, 12) sont ménagés sur les surfaces extérieures des faces (9, 10) du corps élastomère afin de conférer un caractère déformable élastique entre les deux éléments cylindriques (2, 3).

12. Un tampon élastique selon la revendication 1, caractérisé en ce que le corps élastomère (4) est associé par une fixation métal/caoutchouc à l'élément intérieur (2) et

comprend dans chacune des parties massives une ouverture (24) de forme sensiblement triangulaire qui se ferme lorsque le corps élastomère (4) est inséré dan l'élément cylindrique extérieur (3).

13. Un tampon élastique selon la revendication 1, caractérisé en ce que l'élément cylindrique extérieur (2) comprend une partie cylindrique (2') de forte épaisseur (D) dans laquelle sont ménagées, sur des côtés opposés, les cavités (16, 17) obtenues par une réduction de diamètre (d), et une partie cylindrique extérieure (2") de recouvrement de faible épaisseur, comprenant deux ouvertures opposées entre elles et situées en correspondance avec les cavités, les ouvertures étant fermées de façon étanche par les diaphragmes (18, 19) associés à la partie de recouvrement (2") par une fixation caoutchouc/métal.

Fig. 1

Fig. 2

Fig. 3

Fig. 4

Fig. 5

Fig. 7

Fig. 6

Fig. 8